# EUROPÄISCHE PATENTSCHRIFT

(11) **EP 2 475 813 B1**
(45) Veröffentlichungstag und Bekanntmachung des Hinweises auf die Patenterteilung: **16.10.2013**
(21) Anmeldenummer: 10751598.3
(22) Anmeldetag: 27.08.2010
(51) Int. Cl.: D04H 13/00, B32B 5/26, B60N 3/04, D06N 7/00

(54) **RUTSCHFESTE EINLEGEMATTE UND VERFAHREN ZUR HERSTELLUNG DER EINLEGEMATTE**
ANTI-SLIP INSERT MAT AND METHOD FOR PRODUCING SAID INSERT MAT
SURTAPIS ANTIDÉRAPANT, ET PROCÉDÉ DE FABRICATION DE CE SURTAPIS

(30) Priorität: 09.09.2009 DE 102009040761
(43) Veröffentlichungstag der Anmeldung: 18.07.2012
(73) Patentinhaber: Ideal Automotive GmbH Bamberg, Bamberg 96052 (DE)
(72) Erfinder: RÖDING, Hubert, 96157 Ebrach (DE)
(74) Vertreter: Oberdorfer, Jürgen
(86) Internationale Anmeldenummer: PCT/EP2010/062581
(87) Internationale Veröffentlichungsnummer: WO 2011/029736

(56) Entgegenhaltungen:
- WO-A1-2004/050347

## Beschreibung

Die Erfindung betrifft eine rutschfeste Einlegematte nach dem Oberbegriff des Anspruchs 1 sowie ein Verfahren zur Herstellung der Einlegematte.

Bekannte Einlegematten zum Einlegen in Fußräume von Kraftfahrzeugen, insbesondere Pkws, bei denen eine Teppichbodenwanne eingebaut ist, weisen im Wesentlichen folgenden Aufbau auf.

In einer Trägerschicht ist eine Nutz-/Dekorschicht eingetuftet und in den allermeisten Fällen als Schnittfloroberfläche, d. h. mit aufgeschnittenen Tuftschleifen, ausgebildet. Auf der der Dekorseite gegenüberliegenden Seite der Trägerschicht ist ein Vlies angeordnet und flächig mit der Trägerschicht verbunden. Um eine ausreichende Haftung der Einlegematte auf der Teppichbodenwanne des Pkw zu erreichen, ist es üblich, Teilbereiche der freien Oberseite des Vlieses mit kurzen Fasern zu beflocken, so dass Haftinseln entstehen. Das Beflocken von Teilbereichen der freien Oberseite des Vlieses ist außerordentlich aufwändig und teuer. Beispielsweise müssen nach dem Aufbringen der Vliesschicht zunächst die Beflockungsfasern örtlich definiert auf dem Filz befestigt werden. Anschließend ist es erforderlich mittels elektrostatischer Aufladungsvorgänge die Fasern möglichst senkrecht vom Vlies abgehend aufzurichten. Anschließend müssen die aufgerichteten Fasern dauerhaft in der aufgerichteten Position fixiert werden. Zwar können mit einer derartigen Einlegematte die derzeit gängigen Anforderungen hinsichtlich der Haftkraft der Einlegematte auf dem Untergrund, d. h. auf dem Schnittflor der Teppichbodenwanne des Pkws erreicht werden, jedoch erfordert dies einen erheblichen Aufwand. Zum anderen kann es vorkommen, dass beispielsweise durch Verschmutzung der Unterseite der Einlegematte die Verhakungsinseln aus den kurzen, relativ feinen Fasern aus dem Beflockungsvorgang mit der Zeit die Haftkraft auf dem Schnittflor der Teppichbodenwanne des Kraftfahrzeugs einbüßen. Der Grund hierfür ist, dass die Fasern der Beflockungsinseln relativ eng beabstandet zueinander angeordnet sind und im Wesentlichen alle die gleiche Länge aufweisen. Hierdurch ist das Einlagern von Staub und Schmutz im Gebrauch der Einlegematte erleichtert, was zu einer Verminderung der Haftfähigkeit der Einlegematte auf dem Teppichboden des Kraftfahrzeugs führt. Auch eine Reinigung der mittels Beflockung hergestellten Haftinseln an üblichen Autoreinigungsstationen, beispielsweise mit zwei Bürstenwalzen, gelingt nicht immer zufriedenstellend, da der Schmutz und der Staub relativ fest zwischen den Fasern der Beflockungsinseln sitzt.

Aus der DE 10 2005 025 681 A1 ist ein einlagiges Innenverkleidungsteil für Kraftfahrzeuge bekannt, welches eine Trägerschicht und eine Dekorschicht aufweist, wobei die Dekorschicht in die Trägerschicht eingetuftet ist. Gegenüberliegend zur Dekorschicht ist eine Unterschicht vorhanden, welche in dieselbe Trägerschicht eingetuftet ist. Die Unterschicht ist aus geschnittenen Garnschlingen gebildet, wobei sich die freien Enden des Polgarns mit der Unterlage des einlagigen Innenverkleidungsteils verhaken. Zwar hat sich dieses einlagige Innenverkleidungsteil bewährt, jedoch sind die Anforderungen an die Haftfähigkeit von Einlegematten zunehmend anspruchsvoller, so dass eine erhöhte Haftreibung bzw. Haftkraft der Einlegematte auf deren Untergrund erzielt werden soll.

Die WO 2004/050347 A1 offenbart ein strukturiertes Verbundmaterial, welches zumindest eine aus Fasern bestehende Außenschicht und eine Haftschicht umfasst. Diese Schichten werden so bearbeitet, dass höher und tiefer gelegene Bereiche entstehen. Optional kann eine auf ihrer dem Boden zugewandten Seite plane Stützschicht vorgesehen sein. Auch das in dieser Druckschrift offenbarte Verbundmaterial genügt den Anforderungen an eine hohe Haftreibung bzw. Haftkraft nicht.

Aufgabe der Erfindung ist es daher, eine rutschfeste Einlegematte anzugeben, welche einerseits erhöhte Anforderungen an die Haftfähigkeit auf einem Pkw-Bodenteppich, insbesondere einem Schnittvelours-Teppich, d. h. einem Teppich, welcher oberseitig keine Schlingen aufweist, erfüllt.

Des Weiteren sollen eine Einlegematte und ein Herstellverfahren für die Einlegematte angegeben werden, welche im Vergleich zu bekannten Einlegematten bzw. Verfahren kostengünstiger, einfacher und unkomplizierter durchführbar sind.

Des Weiteren soll eine Einlegematte angegeben werden, welche sich von im Gebrauch unvermeidlicher Verschmutzung leicht reinigen lässt und nach dem Reinigen die ursprüngliche Haftkraft, wie sie im Neuzustand vorlag, wieder erreichen soll.

Diese Aufgaben werden mit einer Einlegematte mit den Merkmalen des Anspruchs 1 und einem Verfahren zur Herstellung der Einlegematte mit den Merkmalen des Anspruchs 14 gelöst.

Vorteilhafte Ausführungsformen sind in den jeweils abhängigen Unteransprüchen angegeben.

Erfindungsgemäß wurde erkannt, dass eine gattungsgemäße Einlegematte mit einem Erstrücken als Trägerschicht für eine Dekorschicht und einer textilen, aus Fasern gebildeten Verhakungsschicht derart weitergebildet wird, dass die Verhakungsschicht erhabene Bereiche und verdichtete Bereiche geringerer Höhe besitzt, wobei die erhabenen Bereiche durch freie Enden der Fasern gebildet sind und die Bereiche der Verhakungsschicht geringerer Höhe, d. h. die verdichteten Bereiche durch dauerhaftes Verpressen der freien Enden der Fasern gebildet sind. Eine derartige erfindungsgemäße Einlegematte ist besonders kostengünstig in der Herstellung, da freie Enden der die Verhakungsschicht bildenden textilen Schicht zur Verhakung mit einem Teppichboden eines Kraftfahrzeugs genutzt werden. Durch das bereichsweise Verpressen der die Verhakungsschicht bildenden textilen Schicht entstehen erhabene Bereiche und verpresste Bereiche geringerer Höhe, d. h., dass in diesen Bereichen die textile Schicht, welche die Verhakungsschicht bildet, eine geringere Dicke aufweist. Hierdurch gelingt es die überstehenden Fasern der erhabenen Bereiche intensiver mit der Teppichbodenauskleidung des Kraftfahrzeugs in Kontakt zu bringen. Hierdurch entsteht ein erhöhter Verhakungsgrad, so dass schon bei geringeren Druckbelastungen der Einlegematte ein ausreichender Verhakungsgrad und somit eine gute Haftkraft auf der Pkw-Teppichbodenschicht erzielbar ist.

Gemäß einer besonders bevorzugten Ausführungsform besteht die Verhakungsschicht aus einem Tuft mit einer Trägerschicht und einem in die Trägerschicht eingetuftetem Polgarn. Die erhabenen Bereiche werden durch freie Enden des Polgarns, welches beim oder nach dem Tuften geschnitten wird, gebildet. Die Bereiche der Verhakungsschicht geringerer Höhe werden durch dauerhaftes Verpressen der freien Enden des Polgarns gebildet. Bei dieser Ausführungsform wird als Polgarn bevorzugt ein Multifilament eingesetzt, welches von zumindest einem Monofilament umschlungen ist, wobei das Monofilament im Vergleich zu dem das Multifilament bildenden Filamenten dicker ausgebildet ist.

Das dickere Monofilament ist wendelartig oder schraubenartig um das Multifilament gewunden und wird mit dem Multifilament zusammen als ein Garn beim Tuften verarbeitet. Da die beim Tuften gebildeten Polschlingen aufgeschnitten werden, so dass freie Polgarnenden entstehen, kann sich im Bereich der freien Enden des Polgarns das dickere Monofilament zumindest ein Stück vom Multifilament ablösen und/oder abwickeln. Das abgewickelte/abgelöste Ende des Monofilaments ist dabei aufgrund der vormals vorliegenden Umschlingung des Multifilaments etwas länger als die freien Enden des Multifilaments. Weiterhin sind die freien Enden des Monofilaments etwas steifer und knickfester als die freien Enden der Fasern des Multifilaments. Hierdurch wird erreicht, dass die längeren, weiter vorstehenden Enden des Monofilaments tief in die Teppichstruktur des Pkw-Bodenteppichs eindringen können und somit eine besonders sichere Verhakung und eine besonders widerstandsfähige Anhaftung der Einlegematte gegen Wegrutschen ausbilden.

Gemäß einer weiteren Ausführungsform der erfindungsgemäßen Einlegematte ist die Verhakungsschicht aus einem velourisierten Nadelvlies ausgebildet. Diese Schicht aus einem velourisierten Nadelvlies ist besonders kostengünstig aufzubringen, da die Vliesschicht flächig z.B. mit der Trägerschicht der Dekorschicht verbunden werden kann. Für die Fasern des velourisierten Nadelvlieses kommen insbesondere PET- oder PP- oder PA6- oder PA6.6-Fasern in Betracht. Ein Flächengewicht des velourisierten Nadelvlieses von 200 g/m² bis 800 g/m² hat sich besonders bewährt. Die Fasern, aus denen das velourisierte Nadelvlies gebildet ist, besitzen bevorzugt eine Feinheit von 20 dtex bis 100 dtex und haben eine Schnittlänge von 30 mm bis 80 mm. Das velourisierte Nadelvlies kann bevorzugt als geschorenes Nadelvlies eingesetzt werden. Ferner können zur Bildung des velourisierten Nadelvlieses eine Fasermischung unterschiedlicher Feinheit oder unterschiedlicher Schnittlänge benutzt werden.

Es ist ebenfalls möglich, Fasern aus unterschiedlichen Werkstoffen zu verwenden, beispielsweise eine Mischung aus PP- und PA-Fasern.

Besonders bewährt hat sich, dass die erhabenen Bereiche auf der Unterseite der Einlegematte Inseln bilden. Hierdurch gelingt es punktuell einen erhöhten Verhakungsgrad zwischen der Einlegematte und dem darunter befindlichen Pkw-Bodenteppich zu realisieren.

Gleichermaßen bewährt hat sich auch, dass die erhabenen Bereiche ein zusammenhängendes, insbesondere über die Fläche der Einlegematte zusammenhängendes, Linienmuster bilden. Für den Überstand der erhabenen Bereiche gegenüber den verpressten Bereichen der Verhakungsschicht haben sich Maße von 0,5 mm bis 3 mm, bevorzugt von 1 mm bis 2 mm, bewährt. Innerhalb dieser Bereiche besitzen die freien Enden der die erhabenen Bereiche ausbildenden Fasern noch genug Eigensteifigkeit, um ein Eindringen in die Oberseite des darunter liegenden Pkw-Teppichs zuverlässig zu gewährleisten.

Die dauerhaft verpressten Bereiche sind bevorzugt durch thermisches Verpressen gebildet, wodurch die Filamente des Multifilaments und das umschlingende Monofilament zumindest bereichsweise miteinander verschmolzen sind und/oder die Filamente und die Monofilamente mit der Trägerschicht der Dekorschicht oder mit der Trägerschicht der Verhakungsschicht zumindest teilweise verschmolzen sind. Dies stellt eine ausreichende Dauerhaftigkeit der Verpressung und somit eine dauerhafte Ausbildung des erfindungsgemäß zu realisierenden unterseitigen Reliefs der Einlegematte dar. Als bevorzugte Relation zwischen der Dicke der Filamente, die das Multifilament bilden und dem Monofilament hat sich bewährt, das Monofilament etwa zwei- bis zehnmal, bevorzugt fünf- bis 20-mal so dick auszugestalten. Für das Multifilament und das Monofilament kommen insbesondere Fasern aus PA6, PA12, PP oder PET in Frage.

Um die Rutschfestigkeit der Einlegematte auf dem Pkw-Teppichboden weiter zu verbessern empfiehlt es sich, die erhabenen Bereiche in Bereichen der Einlegematte mit im Gebrauch größerer Tritt- oder Druckbelastung dichter beieinander anzuordnen als in den Bereichen mit geringerer Tritt- oder Druckbelastung. In Bereichen höherer Druckbelastung, also z. B. in den Bereichen, in denen die Fahrgäste mit erhöhter Wahrscheinlichkeit die Füße auf der Einlegematte abstellen, steht im Gebrauch eine größere Flächenbelastung zur Verfügung, die ein Verhaken der freien Faserenden mit dem Pkw-Teppich bewirkt. In diesen Bereichen kann der Flächenanteil der erhabenen Bereiche relativ zu den Flächenanteilen der verpressten Bereiche größer gewählt werden. Im Bereich größerer Tritt- oder Druckbelastung kann auch der Grad der Verpressung, der gegenüber den erhabenen Bereichen zurückgesetzten Bereichen etwas geringer gewählt werden. Hierdurch entstehen im Vergleich zu einer stärkeren Verpressung mehr freie Faserenden, die nicht oder nicht ganz in den Pressverbund integriert sind, und somit gegebenenfalls auch in den verpressten Bereichen zur zusätzlichen Verhakung der Einlegematte im Pkw-Teppichboden beitragen.

Um die Verhakung und somit die Rutschfestigkeit der Einlegematte weiter zu verbessern, ist es auch zweckmäßig, die flächige Größe der erhabenen Bereiche pro Flächeneinheit der Einlegematte im Bereich der größeren Tritt- oder Druckbelastung größer zu wählen als im Bereich geringerer Druckbelastung.

Für die Ausgestaltung der erhabenen Bereiche kommen bevorzugt kreis-, kreisring-, oval- oder drei- oder mehreckig oder unregelmäßig geformte Inselkonturen in Betracht. Bei geschlossenen Linienmustern hat sich ein wabenartiges Linienmuster besonders bewährt.

Besonders bewährt hat sich, dass zumindest zwei Monofilamente das Multifilament nach Art einer zwei- oder mehrgängigen Schraube umschlingen. Hierdurch wird die Anzahl der längeren freien Enden des Monofilaments pro Flächeneinheit erhöht, was zu einer verbesserten Rutschfestigkeit führt. Ein gleicher Effekt der verbesserten Rutschfestigkeit kann erzielt werden, wenn zwei Monofilamente zu einem Umschlingungsmehrfachfilament verdrillt sind und das Umschlingungsmehrfachfilament schraubenartig um das Multifilament des Polgarns geschlungen ist. Auch können mehrere Umschlingungsmehrfachfilamente um ein Multifilament des Polgarns geschlungen sein. Durch eine derartige Ausgestaltung entsteht eine Vielzahl von längeren, überstehenden freien Enden des Monofilaments, welche sich in der Pkw-Teppichstruktur gut verhaken können.

Weiterhin konnte festgestellt werden, dass bei einer gegebenen Gewichtsbelastung der Einlegematte die Rutschfestigkeit der Einlegematte optimal ist, wenn der flächige Anteil der erhabenen Bereiche kleiner oder höchstens gleich groß ist wie der flächige Anteil der verpressten Bereiche der Einlegematte.

Ein erfindungsgemäßes Verfahren zeichnet sich insbesondere dadurch aus, dass auf eine Trägerschicht einer Dekorschicht zunächst eine Verhakungsschicht aufgebracht wird, welche zumindest bereichsweise lokal dauerhaft verpresst wird, so dass erhabene Bereiche mit freien Fasern und verpresste Bereiche niedriger Höhe gebildet werden. Gemäß einer ersten Alternative wird als Verhakungsschicht eine Dilours-Nadelvliesschicht verwendet und die Verpressung erfolgt unter Einsatz von Wärme oder Ultraschall. Gemäß einer zweiten Alternative des erfindungsgemäßen Verfahrens wird die Verhakungsschicht auf zumindest einer Seite der Trägerschicht durch Tuften eines Polgarns in eine Trägerschicht der Verhakungsschicht hergestellt, wobei als Polgarn ein Garn aus einem Multifilament verwendet wird und wobei das getuftete Polgarn geschnitten wird, so dass freie Polenden entstehen. Anschließend werden die freien Polenden teilbereichsweise verpresst und/oder dauerhaft verdichtet, so dass erhabene aus Polenden gebildete Bereiche der Verhakungsschicht entstehen. Für das bereichsweise Verpressen und/oder dauerhafte Verdichten hat sich eine Pressung mittels einer beheizten Pressschablone, welche die erhabenen Bereiche von der Verpressung ausnimmt, bewährt. Hierdurch werden die die Verhakungsschicht bildenden Fasern in den verpressten Bereichen zumindest teilweise miteinander verschmolzen und so dauerhaft verpresst. Gleichwohl eignet sich zum Verpressen und/oder dauerhaften Verdichten auch Ultraschall, der im Zusammenspiel mit einer Pressschablone eine dauerhafte Verbindung der Fasern in den verpressten Bereichen bewirkt.

Bevorzugt wird als Polgarn ein Garn aus einem Multifilament und zumindest einem das Multifilament umschlingenden Monofilament verwendet. Das Monofilament ist dicker ausgebildet als die das Multifilament bildenden Fasern/Filamente.

Weitere vorteilhafte Ausführungsformen sind in weiteren Unteransprüchen sowohl hinsichtlich des Verfahrens als auch hinsichtlich der Einlegematte angegeben.

Im Folgenden wird die Erfindung anhand der Zeichnung beispielhaft näher erläutert. Es zeigen:
- Figur 1:: eine erste Alternative der erfindungsgemäßen Einlegematte in einem stark schematisierten Querschnitt;
- Figur 2:: eine zweite Alternative der erfindungsgemäßen Einlegematte in einem stark schematisierten Querschnitt;
- Figur 3:: ein Detail X aus Fig. 1;
- Figur 4:: eine vergrößerte Darstellung (stark schematisiert) eines Polgarns zur Ausbildung der Einlegematte gemäß Fig. 2 bis 3;
- Figur 5:: eine weitere Ausführungsform der erfindungsgemäßen Einlegematte aufweisend Haftinseln in Kreisform;
- Figur 6:: eine weitere Ausführungsform der erfindungsgemäßen Einlegematte aufweisend Haftinseln in Kreisringform;
- Figur 7:: eine weitere Ausführungsform der erfindungsgemäßen Einlegematte mit Haftinseln in einer Sechseckausführung;
- Figur 8:: die erfindungsgemäße Einlegematte in einer weiteren Ausführungsform mit Haftbereichen in Form von geschlossenen Linienzügen/Linienmustern;
- Figur 9:: die erfindungsgemäße Einlagematte mit Haftungsbereichen in Form eines geschlossenen Wabenmusters;
- Figur 10:: eine weitere Ausführungsform der erfindungsgemäßen Einlegematte mit über die Haftoberfläche der Einlegematte, d. h. die Unterseite der Einlegematte, ungleichmäßig verteilt angeordneten Haftinseln.

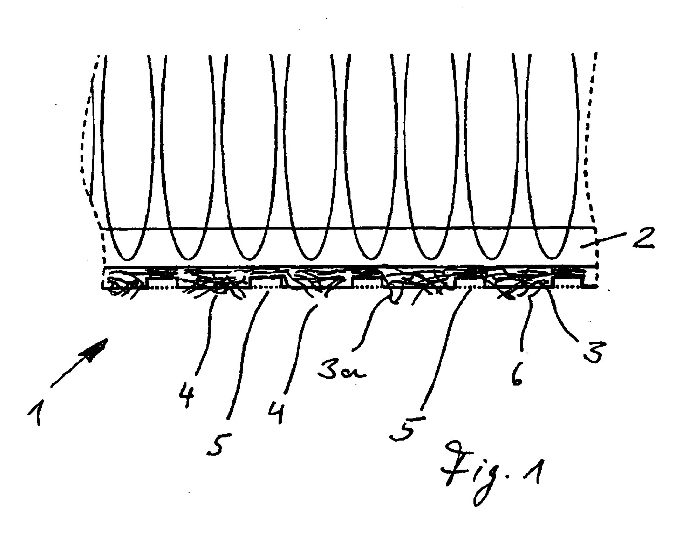

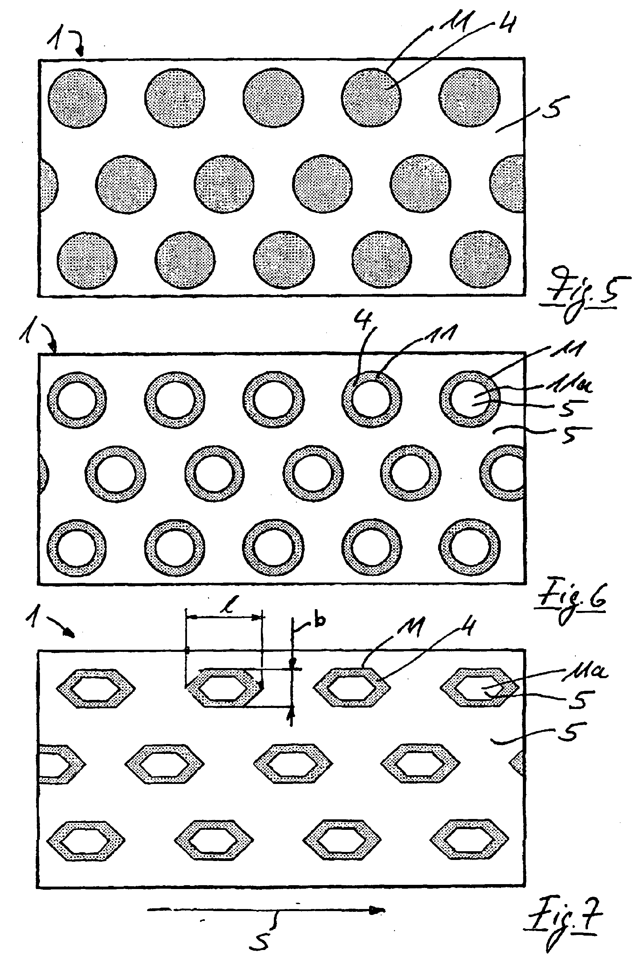

Ein erstes Ausführungsbeispiel der erfindungsgemäßen Einlegematte 1 (Fig. 1) besitzt einen Erstrücken als Trägerschicht 2 für eine Dekorschicht 15. Auf einer Unterseite der Trägerschicht 2 ist mittels einer Verbindungsschicht (nicht gezeigt in Figur 1) eine Verhakungsschicht 3 angeordnet. Die Verhakungsschicht 3 besteht aus Fasern 3a. Die Verhakungsschicht besitzt erhabene Bereiche 4 und verdichtete Bereiche 5. Im Bereich der erhabenen Bereiche 4 stehen unregelmäßig freie Enden 6 der die Verhakungsschicht 3 bildenden Fasern 3a hervor. Im Ausführungsbeispiel gemäß Fig. 1 ist die Verhakungsschicht ein velourisiertes Nadelvlies mit einem Flächengewicht von ca. 200 g/m² bis hin zu 800 g/m². Die Fasern 3a, aus denen das velourisierte Nadelvlies gebildet ist, besitzen eine Feinheit von 20 dtex bis 100 dtex und eine Schnittlänge von 30 mm bis 80 mm. Das velourisierte Nadelvlies ist bevorzugt geschoren, kann aber bei verminderten Anforderungen an die Haftkraft auch ungeschoren sein. Die erhabenen Bereiche 4 können beispielsweise Inseln 11 oder ein geschlossenes Linienmuster 11a sein, was nachfolgend anhand der Fig. 5 bis 9 eingehender erläutert wird.

Die Inseln 11 (Fig. 5 bis 7) können entweder kreisflächenförmig regelmäßig oder unregelmäßig über die Fläche der Einlegematte 1 verteilt sein. Bei einer Ausführungsform gem. Fig. 6 sind die Inseln 11 kreisringförmig, wobei ein Zentrumsbereich 11b ebenfalls einen verdichteten Bereich 5 darstellt.

Bei einer Ausführungsform gem. Fig. 7 ist beispielsweise die Raumform der Inseln 11 als Sechseck dargestellt, welche einen Zentrumsbereich 11b aufweisen. Die Längserstreckung 1 der Inseln 11 ist in diesem Ausführungsbeispiel größer als die Quererstreckung b der Inseln 11. Sofern Inselformen gewählt werden, die eine größere Längserstreckung 1 als die Quererstreckung b besitzen, so empfiehlt es sich die Längserstreckung 1 parallel zu einer Strichrichtung S einer Unterlage 30, auf die die Einlegematte 1 bestimmungsgemäß gelegt werden soll, auszurichten. Hierdurch gelingt eine bessere Verhakung der Einlegematten 1 mit der Unterlage 30.

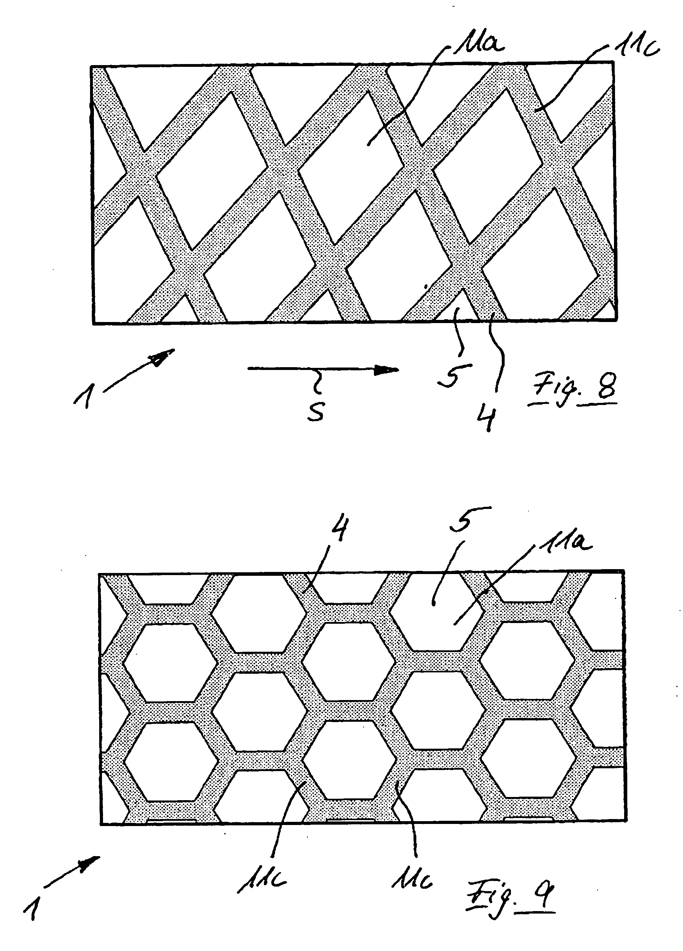

Bei einer Ausführungsform gem. Fig. 8 sind die erhabenen Bereiche 4 als geschlossenes Linienmuster über die Unterseite der Einlegematte 1 verteilt angeordnet. Unter geschlossenem Linienmuster im Sinne der Erfindung ist ein Linienmuster zu verstehen, bei dem alle erhabenen Bereiche 4 der Einlegematte 1 miteinander verbunden sind. Dies unterscheidet das geschlossene Linienmuster von der vorbeschriebenen Anordnung von Inseln 11 auf der Unterseite der Einlegematte 1. Selbstverständlich ist es auch möglich, Teilbereiche der Einlegematte 1 mit einem geschlossenen Linienmuster zu versehen und Restbereiche der Einlegematte 1 mit inselförmigen erhabenen Bereichen 4 zu versehen. Die im Rahmen der Fig. 5 bis 9 zeichnerisch dargestellten Insel- und Linienmuster verstehen sich lediglich als Beispiele. Selbstverständlich können auch andere geometrische Raumformen, wie z. B. Ovale oder Ovale mit einem Zentrumsbereich 11a oder geschlossene Linienmuster 11a mit nicht geraden Verbindungslinien oder unregelmäßig über die Unterseite der Einlegematte 1 verteilten Verbindungslinien ausgeführt werden. Bei einer Ausführungsform der erfindungsgemäßen Einlegematte 1 mit einem geschlossenen Linienmuster 11a, wie es beispielhaft in Fig. 8 angedeutet ist, empfiehlt es sich zumindest Teilbereiche von Linien 11c, welche das geschlossene Linienmuster bilden, zu einer Strichrichtung S einer Unterlage, auf die die Einlegematte bestimmungsgemäß gelegt werden soll, schräg verlaufen zu lassen, d. h. nicht unbedingt ein einem Winkel von 90° oder parallel zur Richtung S. Hierdurch ergibt sich ein erhöhtes Haftvermögen der Einlegematte. Beispielsweise ist bei Kraftfahrzeugen die Strichrichtung S des Pkw-Teppiches (nicht gezeigt) standardmäßig in Fahrtrichtung nach hinten parallel zur Fahrzeuglängsachse orientiert.

Figur 9 zeigt ein besonders bevorzugtes Ausführungsbeispiel der erfindungsgemäßen Einlegematte, bei der die erhabenen Bereiche 4 als geschlossenes Linienmuster in Form einer Wabenstruktur, insbesondere einer Sechseckwabenstruktur ausgebildet sind. Im Rahmen von Versuchen konnte ermittelt werden, dass die Haftkraft eines solchen Linienmusters für die erhabenen Bereiche 4 im Vergleich zu andersartigen Linienmustern die höchsten Haftreibungswerte auf einer Unterlage 30 aufweist.

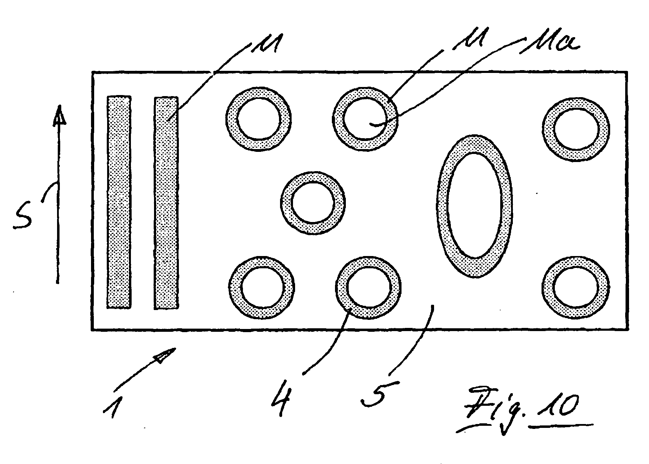

Bei einer Ausführungsform gem. Fig. 10 sind unterschiedliche geometrische Ausbildungen der Inseln 11 in unterschiedlicher Flächendichte über die Unterseite der Einlegematte 1 verteilt verwirklicht.

Besonders vorteilhaft ist es, in Bereichen, in denen im Gebrauch mit einer erhöhten Tritt- oder Druckbelastung zu rechnen ist, beispielsweise in einem Bereich, in dem eine größere Wahrscheinlichkeit herrscht, dass Füße der Fahrgäste abgestellt sind, etwas dichter anzuordnen als in Bereichen mit einer im Gebrauch geringeren Tritt- oder Druckbelastung. Ein Bereich im Gebrauch geringerer Druck- oder Trittbelastung ist beispielsweise derjenige Bereich einer Einlegematte 1, der in einem hinteren Fußraum eines Pkw verlegt wird und dort ein Stück unter den Sitz des Vordersitzes hineinragt. In diesem Bereich können im Gebrauch nur geringere Druck- oder Trittbelastungen auftreten, so dass über die Fläche verteilt eine geringere Dichte der erhabenen Bereiche zweckmäßig ist, damit diese durch die geringere Belastung, insbesondere bereits durch das Eigengewicht der Einlegematte 1 gut verhaken können.

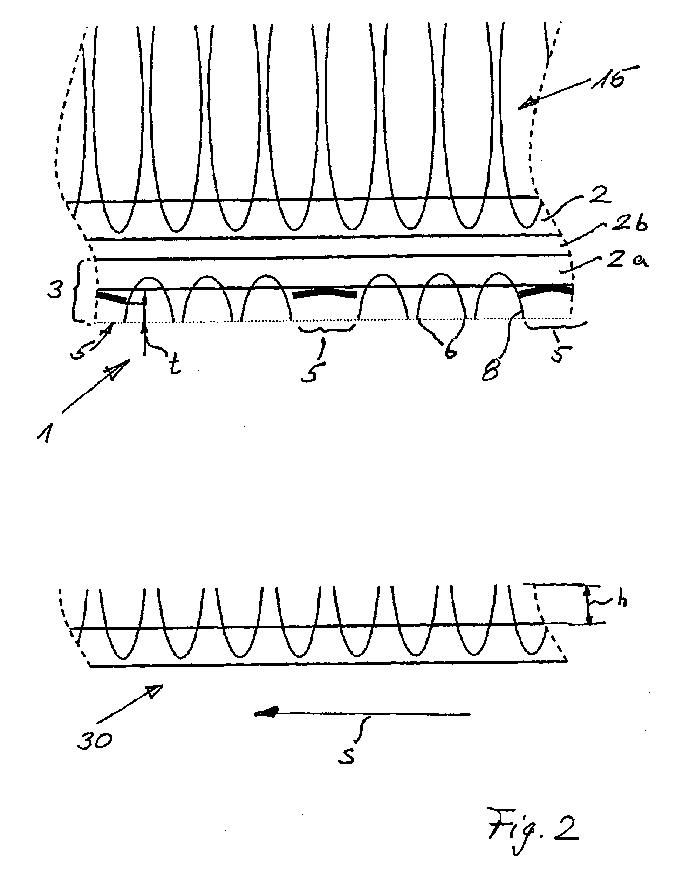

Eine zweite Alternative der erfindungsgemäßen Einlegematte wird im Folgenden anhand der Figuren 2 bis 4 näher erläutert. Die erfindungsgemäße Einlegematte 1 besitzt eine Trägerschicht 2 als Erstrücken für eine Dekorschicht 15 aus einem Tuft. Auf einer Unterseite der Trägerschicht 2 ist die Verhakungsschicht 3 angeordnet. Die Polschlaufen sind aufgeschnitten, so dass freie Enden 6 des Polgarns 8 entstehen. Teilbereiche der Verhakungsschicht 3 sind dauerhaft verdichtete und/oder verpresste Bereiche 5, so dass erhabene Bereiche 4 verbleiben. Die Dekorschicht 15 ist beispielsweise als Schnittflor ausgebildet, wobei die den Schnittflor bildenden geschnittenen Schlaufen in die Trägerschicht 2 eingetuftet sind. Die freien Enden 6 des Polgarns 8 der Verhakungsschicht 3 stehen von der Trägerschicht 2a ab und bilden so Verhakungseinrichtungen mit einer Unterlage 30, welche beispielsweise ein Pkw-Teppich sein kann, der in den meisten Fällen auch ein Tuft ist. Die Unterlage 30 weist üblicherweise eine Strichrichtung S auf, die oftmals in einer Fahrzeuglängsrichtung eines Pkws in Fahrtrichtung nach hinten gerichtet ist. Die verdichteten Bereiche 5 werden durch dauerhaftes Verpressen von freien Enden 6 des Polgarns 8 erreicht und sind in ihrer vertikalen Erstreckung von der Trägerschicht 2 aus gesehen niedriger als die erhabenen Bereiche 4, welche eine größere vertikale Erstreckung von der Trägerschicht 2 weg besitzen.

Es hat sich bewährt, die erhabenen Bereiche 4 etwa 0,5 mm bis 3 mm, insbesondere 1 mm bis 2 mm über die verdichteten Bereiche 5 überstehen zu lassen. Um dies zu erreichen, kann entweder der Grad der Verdichtung variiert werden oder die Länge der freien Enden 6 bei vorgegebenem Verdichtungsgrad für die verdichteten Bereiche 5 entsprechend eingerichtet werden. Dies hängt im Wesentlichen von der Beschaffenheit der Unterlage 30 ab. So empfiehlt es sich, z.B. die freien Enden 6 bei einem besonders niederflorigen Pkw-Teppich (Unterlage 30) ebenfalls in ihrer Länge eher klein zu halten. Beispielsweise sollte die Länge der freien Enden 6 oder der Überstand t der erhabenen Bereiche 4 gegenüber der verdichteten Bereiche 5 sinnvollerweise nicht größer gewählt werden als die Florhöhe h der Unterlage 30. Um einen entsprechenden Überstand t zwischen den erhabenen Bereichen 4 und den verdichteten Bereichen 5 zu erreichen, muss der Verdichtungsgrad zur Herstellung der verdichteten Bereiche entsprechend eingestellt werden.

Bei höherflorigen Unterlagen kann der Verdichtungsgrad etwas geringer gewählt werden und ein entsprechender Überstand t der erhabenen Bereiche 4 gegenüber den verdichteten Bereichen 5 durch eine größere Länge der freien Enden 6 erreicht werden.

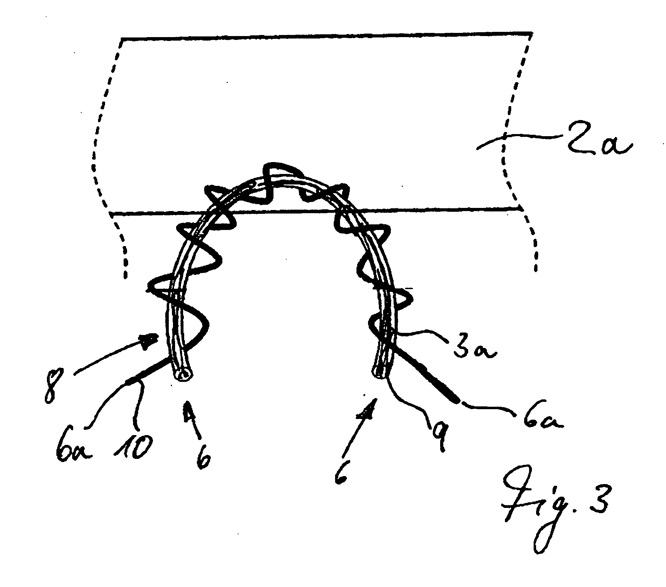

Die Verhakungsschicht 3 ist aus einem speziellen Polgarn 8 gebildet, welches anhand der Fig. 3 nunmehr näher erläutert wird. Das Polgarn 8 besitzt ein zentrales Multifilament 9, welches aus einer Vielzahl von feinen Filamenten/Fasern 3a gebildet ist. Um das Multifilament 9 herum ist ein Monofilament 10 geschlungen, wobei der Verbund aus dem Multifilament 9 und dem Monofilament 10 bereits vor der Herstellung des Tufts der Verhakungsschicht 3 ausgebildet wird und der Verbund in die Trägerschicht 2a eingetuftet wird. Beim Tuften werden die aus Polgarn 8 gebildeten Polschlaufen geschnitten, so dass die Verhakungsschicht 3 nach Art einer Schnittveloursschicht ausgebildet ist. Hierdurch entstehen die freien Enden 6 des Polgarns 8. Da das Monofilament 10 wesentlich dicker ist als die Fasern 3a des Multifilaments 9, besteht eine Tendenz des Monofilaments 10 sich vom Multifilament 9 ein Stück abzuwickeln. Hierdurch entstehen längere freie Enden 6a des Monofilaments 10, welche eine gegenüber den Filamenten/Fasern 3a des Multifilaments 9 eine größere Steifigkeit aufweisen. Diese längeren und steiferen Enden 6a des Monofilaments können sich beim Auflegen auf die Unterlage 30 gut in der Unterlage 30 verhaken, da sie aufgrund der höheren Knicksteifigkeit weiter in den Flor der Unterlage 3 eindringen können. Dieser Verhakungseffekt kann noch verstärkt werden, indem das Monofilament 10 vor dem Herstellen des Verbunds aus dem Multifilament 9 und dem Monofilament 10 zum Polgarn 8 etwas aufgerauht wird.

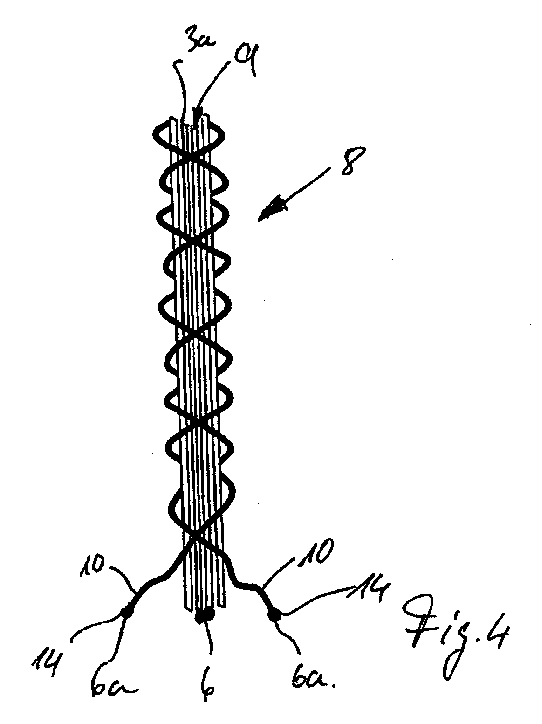

Im Ausführungsbeispiel gem. Fig. 3 ist ein einziges Monofilament 10 um ein aus Fasern/Filamenten 3a gebildetes Multifilament geschlungen. Es ist selbstverständlich auch möglich zwei oder mehr Monofilamente 10 um das Multifilament 9 aus den Filamenten/Fasern 3a zu schlingen, so dass die Umschlingung des/der Monofilament/e 10 um das Multifilament 9 nach Art einer zwei- oder mehrgängigen Schraube ausgebildet ist (vgl. Fig. 4). Dort ist ein schematisch stark vergrößerter Ausschnitt eines Polgarns 8 gezeigt, bei dem zwei Monofilamente 10 nach Art einer zweigängigen Schraube um das Multifilament 9 geschlungen sind. Bei einer mehrfachen Umschlingung des Multifilaments 9 mit zwei oder mehreren Monofilamenten 10 entsteht dementsprechend beim Schneiden der Tuftschlaufen (Polschlaufen) eine Vielzahl von freien Enden 6a der Monofilamente 10.

Gemäß einer weiteren Ausführungsform (nicht gezeigt) können zwei oder mehrere Monofilamente 10 vor dem Umschlingen um das Multifilament 9 zu einem zwei oder mehrere Monofilamente 10 aufweisenden Umschlingungsmehrfachfilament ausgebildet werden, wobei dann das Umschlingungsmehrfachfilament um das Multifilament 9 wie oben beschrieben geschlungen ist.

Die Filamente/Fasern 3a des Multifilaments 9 weisen zweckmäßigerweise eine Feinheit von 20 dtex bis 80 dtex auf. Das Monofilament 10 oder die Monofilamente 10 weisen bevorzugt eine Feinheit von 40 dtex bis 800 dtex auf.

Um die Verhakung der freien Enden 6a der Monofilamente in der Unterlage 30 weiter zu verbessern ist es sinnvoll, die freien Enden 6a wie auch die freien Enden 6 im Bereiche der erhabenen Bereiche 4 einer kurzen Wärmebehandlung zu unterziehen, so dass ein bereichsweises Anschmelzen und tropfenartiges Verdicken der Enden 6a und 6 erzielt wird. Diese endseitigen Verdickungen 14 sorgen beim Eintauchen und beim Verhaken in der Unterlage 30 für eine weiter erhöhte Haftfestigkeit, insbesondere dadurch, dass die Verdickungen mit bloßen Augen zwar tropfenförmig aussehen, jedoch feine Verhakungsunebenheiten aufweisen und somit eine erhöhte Verhakung mit der Unterlage 30 erreichbar ist.

Die bereits beschriebenen möglichen Ausführungsformen der erhabenen Bereiche 4 im Vergleich zu den verdichteten Bereichen 5, welche im Zusammenhang mit der ersten Alternative gem. Fig. 1 gemacht wurden, gelten für das zweite Ausführungsbeispiel gem. Fig. 2 bis 4 selbstverständlich ebenso.

Das erfindungsgemäße Verfahren wird im Folgenden kurz erläutert. Es zeichnet sich insbesondere dadurch aus, dass zunächst ein Erstrücken als Trägerschicht 2 der Einlegematte 1 zur Verfügung gestellt wird. In diesem Erstrücken wird eine Dekorschicht 15 eingetuftet oder flächig aufgebracht. Als Verhakungsschicht 3 wird entweder ein velourisiertes Nadelvlies (Dilours) oder eine Tuftschicht mit einer Trägerschicht 2a verwendet: Bei einem flächigen Aufbringen empfiehlt sich insbesondere die Verwendung eines velourisiertes Nadelvlieses in oben bereits erläuterter Spezifikation. Bei der Verwendung eines Tufts als Verhakungsschicht 3 besteht das Polgarn 8 aus einem Fasern/Filamente 3a aufweisenden Multifilament 9. Bevorzugt ist um das Multifilament 9 zumindest ein Monofilament 10 herumgeschlungen. Das getuftete Polgarn 8 der Verhakungsschicht 3 wird geschnitten, so dass freie Polenden 6 entstehen. Anschließend wird die Verhakungsschicht teilbereichsweise verpresst und/oder teilbereichsweise dauerhaft verdichtet, so dass erhabene, aus Polenden 6 gebildete Bereiche 4 der Verhakungsschicht 3 entstehen. Das Verpressen und/oder dauerhafte Verdichten geschieht zweckmäßigerweise nach dem Tuften und Schneiden der Verhakungsschicht mittels einer beheizten Prägeschablone (nicht gezeigt), welche auf die Verhakungsschicht 3 aufgesetzt wird und mittels ausreichendem Pressdruck für die Ausbildung der verdichteten und/oder verpressten Bereiche 5 sorgt. Ein Verpressen mittels einer beheizten Pressschablone ist sowohl für die Ausführungsform mit einem velourisierte Nadelvlies als auch für die Ausführungsform mit einer getufteten Verhakungsschicht aus einem Multifilament und gegebenenfalls einem Monofilament als Polgarn geeignet.

Das Verpressen kann auch derart erfolgen, dass beispielsweise mit einer Pressschablone die zu verdickenden und zu verpressenden Bereiche 5 auf der Verhakungsschicht 3 niedergedrückt werden und anschließend mittels Ultraschall eine Verbindung der niedergedrückten Fasern zueinander oder gegebenenfalls zur Trägerschicht 2a erreicht wird.

Zweckmäßigerweise werden die Monofilamente 10 vor dem Umschlingen um das Multifilament 9 gerauht, so dass nach dem Schneiden der Polschlaufen nach dem Tuften freie Enden 6a des Monofilaments 10 entstehen, welche eine gerauhte und somit tendenziell verhakungsfreundlichere Oberfläche besitzen.

Besonders zweckmäßig ist es, freie Enden 6a der Monofilamente 10 und des Multifilaments 9 kurzzeitig anzuschmelzen, so dass eine endseitige Verdickung 14 gebildet wird, welche sich besonders gut in der Unterlage 30, beispielsweise einer Teppichbodenwanne eines Pkws verhaken. Ein derartiges kurzzeitiges Anschmelzen kann beispielsweise mittels Heißluft erfolgen oder mittels einer zur oben erwähnten Pressschablone korrespondierenden zweiten Pressschablone, welche beheizt ist und nur soweit auf die Verhakungsschicht 3 aufgesetzt wird, bis die freien Enden 6, 6a der Multifilamente 9 und des Monofilaments 10 berührt werden und angeschmolzen werden.

Die erfindungsgemäße Einlegematte 1 und das erfindungsgemäße Verfahren zeichnen sich insbesondere dadurch aus, dass die Einlegematte 1 eine besonders gute Haftfähigkeit auf üblichen Teppichbodenwannen von Pkws besitzt und zudem besonders kostengünstig herstellbar ist, da der Beflockungsschritt eingespart werden kann. Des Weiteren ist diese Einlegematte besonders leicht zu reinigen, da sich im Gebrauch festsetzender Schmutz aus den erhabenen Bereichen leicht wieder entfernen lässt und somit die ursprüngliche neuwertige Hafteigenschaft der Einlegematte zumindest annähernd mit üblichen Reinigungsmethoden wieder hergestellt werden kann.

Das erfindungsgemäße Verfahren zeichnet sich insbesondere durch die kostengünstige Durchführbarkeit aus. Des Weiteren ist der erfindungsgemäß vorgesehene Prägeschritt zum Verdichten der Verhakungsschicht sehr prozesssicher und einfach durchführbar, so dass mit geringen Ausfällen und einem geringem Ausschussanteil gerechnet werden kann.

### Bezugszeichenliste:

- 1: Einlegematte
- 2: Trägerschicht der Dekorschicht 15
- 2a: Trägersicht der Verhakungsschicht 3
- 2b: Verbindungsschicht
- 3: Verhakungsschicht
- 3a: Fasern/Filamente
- 4: erhabene Bereiche
- 5: verdichtete und/oder verpresste Bereiche
- 6: freie Enden
- 6a: längere freie Enden des Monofilaments 10
- 7: verlourisiertes Nadelvlies
- 8: Polgarn
- 9: Multifilament
- 10: Monofilament
- 11: Inseln
- 11a: geschlossenes Linienmuster
- 11b: Zentrumsbereich
- 11c: Linienabschnitte

- 14: tropfenartige Verdickung
- 15: Dekorschicht
- 30: Unterlage

- l: Längserstreckung der Inseln 11
- b: Längserstreckung der Inseln 11
- S: Strichrichtung
- t: Überstand
- h: Florhöhe

## Patentansprüche

1. Rutschfeste Einlegematte mit einer Trägerschicht (2, 2a) und einer textilen aus Filamenten/Fasern (3a) gebildeten Verhakungsschicht (3), die bei bestimmungsgemäßem Gebrauch einer Unterlage (30), insbesondere einem PKW-Teppich, zugewandt ist und mit dieser verhakbar ausgebildet ist, **dadurch gekennzeichnet, dass** die Verhakungsschicht (3) erhabene Bereiche (4) und verdichtete Bereiche (5) geringerer Höhe besitzt, wobei die erhabenen Bereiche (4) durch freie Enden (6, 6a) der Fasern (3a) gebildet sind und die verdichteten Bereiche (5) der Verhakungsschicht (3) durch dauerhaftes Verpressen der freien Enden (6, 6a) der Fasern (3a) gebildet sind.

2. Einlegematte nach Anspruch 1, **dadurch gekennzeichnet, dass** die Verhakungsschicht (3)ein Tuft mit einer Trägerschicht (2a) ist, in den Polgarn (8) eingetuftet ist, wobei die erhabenen Bereiche (4) durch freie Enden (6, 6a) des Polgarns (8) gebildet sind, die verdichteten Bereiche (5) der Verhakungsschicht (3) durch dauerhaftes Verpressen der freien Enden (6, 6a) des Polgarns (8) gebildet sind und das Polgarn (8) aus einem Multifilament (9) besteht.

3. Einlegematte nach Anspruch 2, **dadurch gekennzeichnet, dass** das Multifilament (9) von zumindest einem Monofilament (10) umschlungen ist, wobei das Monofilament (10) im Vergleich zu den das Multifilament (9) bildenden Fasern/Filamenten (3a) dicker ausgebildet ist.

4. Einlegematte nach Anspruch 1, **dadurch gekennzeichnet, dass** die Verhakungsschicht (3) aus einem velourisierte Nadelvlies (7) ausgebildet ist, wobei die Fasern der Verhakungsschicht (3) aus PET und/oder PP und/oder PA6 und/oder PA6.6 ausgebildet sind, wobei das velourisierte Nadelvlies (7) ein Flächengewicht von 200 g/m² bis 800 g/m² besitzt.

5. Einlegematte nach einem der vorangegangenen Ansprüche, **dadurch gekennzeichnet, dass** die erhabenen Bereiche (4) Inseln (11) bilden.

6. Einlegematte nach einem der vorangegangenen Ansprüche, **dadurch gekennzeichnet, dass** die erhabenen Bereiche (4) ein geschlossenes Linienmuster (11a), insbesondere nach Art eines Sechseckwabenmusters bilden.

7. Einlegematte nach einem der Ansprüche 2 bis 6, **dadurch gekennzeichnet, dass** die dauerhaft verpressten Bereiche (5) durch thermisches Verpressen gebildet sind und die Filamente (3a) des Multifilaments (9) und/oder das umschlingende Monofilament (10) zumindest bereichsweise miteinander verschmolzen sind und/oder die Filamente (3a) und/oder die Monofilamente (10) untereinander und mit der Trägerschicht (2a) zumindest teilweise verschmolzen sind.

8. Einlegematte nach einem der Ansprüche 3 bis 7, **dadurch gekennzeichnet, dass** die Dicke des Monofilaments (10) mindestens das zwei- bis zehnfache, bevorzugt mindestens das fünf- bis zwanzigfache der Filamente (3a) des Multifilaments (9) beträgt.

9. Einlegematte nach einem der vorangegangenen Ansprüche, **dadurch gekennzeichnet, dass** die erhabenen Bereiche (4) in Bereichen der Einlegematte (1) mit im Gebrauch größerer Tritt- oder Druckbelastung dichter beieinander angeordnet sind als in Bereichen mit geringerer Tritt- oder Druckbelastung.

10. Einlegematte nach einem der vorangegangenen Ansprüche, **dadurch gekennzeichnet, dass** der Grad der Verpressung in Bereichen mit im Gebrauch größerer Tritt- oder Druckbelastung geringer ist als in Bereichen mit geringerer Tritt- oder Druckbelastung.

11. Einlegematte nach einem der vorangegangenen Ansprüche, **dadurch gekennzeichnet, dass** die flächige Größe der erhabenen Bereiche (4) pro Flächeneinheit im Bereich größerer Trittoder Druckbelastung größer ist als im Bereich geringerer Tritt- oder Druckbelastung.

12. Einlegematte nach einem der Ansprüche 3 bis 11, **dadurch gekennzeichnet, dass** zumindest zwei Monofilamente (10) das Multifilament (9) nach Art einer zwei- oder mehrgängigen Schraube umschlingen.

13. Einlegematte nach einem der Ansprüche 3 bis 12, **dadurch gekennzeichnet, dass** zumindest zwei Monofilamente (10) ein Umschlingungsmehrfachfilament bilden, welches das Multifilament (9) umschlingt, wobei insbesondere mehrere Umschlingungsmehrfachfilamente das Multifilament (9) umschlingen.

14. Verfahren zum Herstellen einer rutschfesten Einlegematte (1) aufweisend die Schritte:
- Bereitstellen einer Trägerschicht (2, 2a) einer Verhakungsschicht (3) der Einlegematte (1),
- Herstellung einer Verhakungsschicht (3) auf zumindest einer Seite der Trägerschicht (2, 2a) durch Tuften eines Polgarns (8) oder durch flächiges aufbringen einer Schicht aus velourisiertem Nadelvlies (7),
- Verwenden eines Polgarns (8), welches aus einem Multifilament (9) gebildet ist, wobei das getuftete Polgarn (8) geschnitten wird, so dass freie Polenden (6, 6a) entstehen oder
- Verwenden einer velourisierten Nadelvliesschicht (7) zur Ausbildung der Verhakungsschicht (3),
- Verpressen und/oder dauerhaftes Verdichten von Teilbereichen (5) der Verhakungsschicht (3), so dass erhabene, aus Polenden (6, 6a) des Polgarns (8) oder freien Fasern (3a) des velourisierten Nadelvlieses (7) gebildete Bereiche (4) der Verhakungsschicht (3) entstehen.

15. Verfahren nach Anspruch 14, **dadurch gekennzeichnet, dass** das als Polgarn (8) ein Multifilament (9) verwendet wird, welches von zumindest einem Monofilament (10) umschlungen ist, wobei das Monofilament (10) gegenüber einer Faser/einem Filament (3a) des Multifilaments dicker ausgebildet ist.

16. Verfahren nach einem der Ansprüche 14 oder 15, **dadurch gekennzeichnet, dass** das bereichsweise Verpressen und/oder dauerhafte Verdichten durch Temperatureinwirkung mittels einer beheizten Pressschablone, das Verpressen und/oder dauerhafte Verdichten durch Ultraschalleinwirkung und Pressen mit einer Pressschablone bewirkt wird.

17. Verfahren nach einem der Ansprüche 15 bis 16, **dadurch gekennzeichnet, dass** freie Enden (6, 6a) der Monofilamente (10) und des Multifilaments (9) in den erhabenen Bereichen (4) kurzzeitig angeschmolzen werden, so dass sich endseitige Verdickungen (14) bilden, wobei das kurzzeitige Anschmelzen mittels Heißluft erfolgt oder das kurzzeitige Anschmelzen durch eine beheizte Platte bewirkt wird, welche auf die freien Polenden (6, 6a) oder freie Enden der Fasern des velourisierten Nadelvlieses, diese berührend aber nicht oder nur unwesentlich verformend, aufgesetzt wird.

## Claims

1. An anti-slip insert mat with a backing layer (2, 2a) and a textile hooking layer (3), which is composed of filaments/fibers (3a), which when used as intended, is oriented toward an underlying support (30), in particular a passenger vehicle carpet, and is embodied so that it is able to hook into the latter, **characterized in that** the hooking layer (3) has raised regions (4) and compacted regions (5) of lower height, with the raised regions (4) being composed of free ends (6, 6a) of the fibers (3a) and the compacted regions (5) of the hooking layer (3) being produced by permanent compression of the free ends (6, 6a) of the fibers (3a).

2. The insert mat as recited in claim 1, **characterized in that** the hooking layer (3) is a tuft with a backing layer (2a) into which a pile yarn (8) is tufted, with the raised regions (4) being composed of free ends (6, 6a) of the pile yarn (8), the compacted regions (5) of the hooking layer (3) being produced by permanent compression of the free ends (6, 6a) of the pile yarn (8), and the pile yarn (8) being composed of a multifilament (9).

3. The insert mat as recited in claim 2, **characterized in that** at least one monofilament (10) is wound around the multifilament (9), with the monofilament (10) being embodied as thicker than the fibers/filaments (3a) composing the multifilament (9).

4. The insert mat as recited in claim 1, **characterized in that** the hooking layer (3) is composed of a velourized needle punched nonwoven (7), the fibers of the hooking layer (3) are composed of PET and/or PP and/or PA6 and/or PA6.6, and the velourized needle punched nonwoven (7) has a weight per unit area of 200 g/m² to 800 g/m².

5. The insert mat as recited in one of the preceding claims, **characterized in that** the raised regions (4) form islands (11).

6. The insert mat as recited in one of the preceding claims, **characterized in that** the raised regions (4) form a closed linear pattern (11a), particularly in the form of a hexagonal honeycomb pattern.

7. The insert mat as recited in one of claims 2 through 6, **characterized in that** the permanently compacted regions (5) are produced by means of thermal compression and the filaments (3a) of the multifilament (9) and/or the winding monofilament (10) are fused to one another at least in some regions and/or the filaments (3a) and/or the monofilaments (10) are at least partially fused to one another and to the backing layer (2a).

8. The insert mat as recited in one of claims 3 through 7, **characterized in that** the thickness of the monofilament (10) is at least two to ten times, preferably at least five to twenty times that of the filaments (3a) of the multifilament (9).

9. The insert mat as recited in one of the preceding claims, **characterized in that** in regions of the insert mat (1) that are subjected to greater stepping pressure or compressive load during use, the raised regions (4) are positioned closer together than they are in regions that are subjected to less stepping pressure or compressive load.

10. The insert mat as recited in one of the preceding claims, **characterized in that** in regions that are subjected to greater stepping pressure or compressive load, the degree of compaction is less than it is in regions that are subjected to less stepping pressure or compressive load.

11. The insert mat as recited in one of the preceding claims, **characterized in that** in the region that is subjected to greater stepping pressure or compressive load, the size in area of the raised regions (4) is greater per unit area than it is in the region that is subjected to less stepping pressure or compressive load.

12. The insert mat as recited in one of claims 3 through 11, **characterized in that** at least two monofilaments (10) are wound around the multifilament (9) in a manner that resembles a two-threaded or multi-threaded screw.

13. The insert mat as recited in one of claims 3 through 12, **characterized in that** at least two monofilaments (10) form a winding multifilament that is wound around the multifilament (9) and in particular, several winding multifilaments are wound around the multifilament (9).

14. A method for producing an anti-slip insert mat (1), composed of the following steps:
- preparation of a backing layer (2, 2a) of a hooking layer (3) of the insert mat (1),
- production of a hooking layer (3) on at least one side of the backing layer (2, 2a) by tufting a pile yarn (8) or mounting a layer of velourized needle punched nonwoven (7) to the entire surface,
- use of a pile yarn (8), which is composed of a multifilament (9), with the tufted pile yarn (8) being cut to produce free pile ends (6, 6a) or
- use of a velourized needle punched nonwoven (7) to form the hooking layer (3),
- compression and/or permanent compaction of subregions (5) of the hooking layer (3) in a manner that produces raised regions (4) of the hooking layer (3), composed of pile ends (6, 6a) of the pile yarn (8) or free fibers (3a) of the velourized needle punched nonwoven (7).

15. The method as recited in claim 14, **characterized in that** a multifilament (9) is used as the pile yarn (8) and has at least one monofilament (10) wound around it, said monofilament (10) being embodied as thicker than a fiber/filament (3a) of the multifilament.

16. The method as recited in claim 14 or 15, **characterized in that** the compression in some regions and/or permanent compaction is produced through the application of heat by means of a heated pressing template or the compression and/or permanent compaction is produced by means of ultrasound and pressing with a pressing template.

17. The method as recited in one of claims 15 through 16, **characterized in that** in the raised regions (4), free ends (6, 6a) of the monofilaments (10) and of the multifilament (9) are subjected to a brief partial melting, producing thickenings (14) at the ends and the brief partial melting is produced by means of hot air or the brief partial melting is produced by means of a heated plate, which is placed onto the free pile ends (6, 6a) or the free ends of the fibers of the velourized needle punched nonwoven, touching them, but not deforming them or only deforming them to an insignificant degree.

## Revendications

1. Surtapis antidérapant, comportant une couche de support (2, 2a) et une couche d'accrochage (3) textile formée de filaments/fibres (3a) qui, lors d'un usage conforme, est tournée vers un support (30), en particulier vers un tapis de voiture particulière, et est réalisée de manière à pouvoir s'accrocher avec celui-ci, **caractérisé en ce que** la couche d'accrochage (3) possède des zones surélevées (4) et des zones compactées (5) de plus faible hauteur, les zones surélevées (4) étant formées par des extrémités libres (6, 6a) des fibres (3a) et les zones compactées (5) de la couche d'accrochage (3) étant formées par undurable des extrémités libres (6, 6a) des fibres (3a).

2. Surtapis selon la revendication 1, **caractérisé en ce que** la couche d'accrochage (3) est un produit de touffetage comportant une couche de support (2a) qui est touffetée dans le fil de poil (8), les zones surélevées (4) étant formées par des extrémités libres (6, 6a) du fil de poil (8), les zones compactées (5) de la couche d'accrochage (3) étant formées par une compression durable des extrémités libres (6, 6a) du fil de poil (8), et le fil de poid (8) étant constitué par un multifilament (9).

3. Surtapis selon la revendication 2, **caractérisé en ce que** le multifilament (9) est enlacé par au moins un monofilament (10), le monofilament (10) étant réalisé plus épais par comparaison aux fibres/filaments (3a) formant le multifilament (9).

4. Surtapis selon la revendication 1, **caractérisé en ce que** la couche d'accrochage (3) est constituée par une nappe aiguilletée (7) veloutée, les fibres de la couche d'accrochage (3) étant constituées en PET et/ou PP et/ou PA6 et/ou PA6.6, la nappe aiguilletée (7) veloutée possédant un poids surfacique de 200 g/m² à 800 g/m².

5. Surtapis selon l'une des revendications précédentes, **caractérisé en ce que** les zones surélevées (4) forment des îlots (11).

6. Surtapis selon l'une des revendications précédentes, **caractérisé en ce que** les zones surélevées (4) forment un motif de lignes fermées (11a), en particulier à la manière d'un motif hexagonal en nids d'abeilles.

7. Surtapis selon l'une des revendications 2 à 6, **caractérisé en ce que** les zones (5) comprimées durablement sont formées par compression thermique et **en ce que** les filaments (3a) du multifilament (9) et/ou le monofilament enlaçant (10) sont au moins localement fondus les uns avec les autres et/ou les filaments (3a) et/ou les monofilaments (10) sont fondus entre eux et au moins partiellement avec la couche de support (2a).

8. Surtapis selon l'une des revendications 3 à 7, **caractérisé en ce que** l'épaisseur du monofilament (10) est au moins deux à dix fois, de préférence au moins cinq à vingt fois celle des filaments (3a) du multifilament (9).

9. Surtapis selon l'une des revendications précédentes, **caractérisé en ce que** dans des zones du surtapis (1) présentant une charge de passage et de pression plus élevée en usage, les zones surélevées (4) sont agencées plus étroitement les unes à côté des autres que dans des zones présentant une charge de passage et de pression plus faible.

10. Surtapis selon l'une des revendications précédentes, **caractérisé en ce que** dans des zones présentant une charge de passage ou de pression plus élevée en usage, le taux de compression est inférieur à celui dans des zones présentant une charge de passage et de pression plus faible.

11. Surtapis selon l'une des revendications précédentes, **caractérisé en ce que** dans la zone présentant la charge de passage ou de pression plus élevée, la taille surfacique des zones surélevées (4) par unité de surface est supérieure à celle dans la zone présentant la charge de passage ou de pression plus faible.

12. Surtapis selon l'une des revendications 3 à 11, **caractérisé en ce qu'**au moins deux monofilaments (10) enlacent le multifilament (9) à la manière d'une vis à deux ou à plusieurs pas.

13. Surtapis selon l'une des revendications 3 à 12, **caractérisé en ce qu'**au moins deux minomfilaments (10) constituent un polyfilamant d'enlacement qui enlace le multifilament (9), et en particulier plusieurs polyfilaments d'enlacement enlacent le multifilament (9).

14. Procédé pour réaliser un surtapis antidérapant (1), comprenant les étapes suivantes :
- on fournit une couche de support (2, 2a) d'une couche d'accrochage (3) du surtapis (1),
- on réalise une couche d'accrochage (3) sur au moins un côté de la couche de support (2, 2a) par touffetage d'un fil de poil (9) ou par application surfacique d'une surface en nappe aiguilletée (7) veloutée,
- on utilise un fil de poil (8) qui est formé par un multifilament (9), le fil de poil (8) touffeté étant coupé de manière à former des extrémités de poil libres (6, 6a), ou
- on utilise une couche aiguilletée (7) veloutée pour réaliser une couche d'accrochage (3),
- on comprime et/ou compacte durablement des zones partielles (5) de la couche d'accrochage (3), de manière à former des zones surélevées (4) de la couche d'accrochage (3), qui sont formées par des extrémités de poil (6, 6a) du fil de poil (8) ou par des fibres libres (3a) de la nappe aiguilletée (7) veloutée.

15. Procédé selon la revendication 14, **caractérisé en ce que** comme fil de poil (8), on utilise un multifilament (9) qui est enlacé par au moins un monofilament (10), le monofilament (10) étant réalisé plus épais par rapport à une fibre/un filament (3a) du multifilament.

16. Procédé selon l'une des revendications 14 ou 15, **caractérisé en ce que** la compression locale et/ou le compactage durable est réalisé(e) sous l'action de la température au moyen d'un gabarit de compression chauffé, et la compression et/ou le compactage durable est réalisé(e) sous l'action d'ultrasons et par compression au moyen d'un gabarit de compression.

17. Procédé selon l'une des revendications 15 à 16, **caractérisé en ce que** des extrémités libres (6, 6a) des monofilaments (10) et du multifilament (9) sont brièvement fondues dans les zones surélevées, de sorte qu'il en résulte des épaississements (14) du côté extrémité, la fusion brève s'effectuant par air chaud ou la fusion brève étant réalisée par une plaque chauffée que l'on pose sur les extrémités de poil libres (6, 6a) ou sur les extrémités des fibres de la nappe aiguilletée veloutée, qui les touche mais qui ne les déforme pas ou seulement de façon négligeable.
